# EUROPEAN PATENT SPECIFICATION

(11) **EP 2 372 811 B1**
(45) Date of publication and mention of the grant of the patent: **25.02.2015**
(21) Application number: 09834998.8
(22) Date of filing: 25.12.2009
(51) Int. Cl.: H01M 2/16, H01M 10/052, H01M 10/0566

(54) **SEPARATOR FOR LITHIUM ION SECONDARY BATTERY, AND LITHIUM ION SECONDARY BATTERY**
SEPARATOR FÜR EINE LITHIUMIONEN-SEKUNDÄRBATTERIE UND LITHIUMIONEN-SEKUNDÄRBATTERIE
SEPARATEUR POUR BATTERIE SECONDAIRE AU LITHIUM-ION ET BATTERIE SECONDAIRE AU LITHIUM-ION ASSOCIEE

(30) Priority: 26.12.2008 JP 2008334625
(43) Date of publication of application: 05.10.2011
(73) Proprietor: Zeon Corporation, Tokyo 100-8246 (JP)
(72) Inventor: WAKIZAKA, Yasuhiro, Tokyo 100-8246 (JP); FUKUMINE, Mayumi, Tokyo 100-8246 (JP)
(74) Representative: Vossius & Partner
(86) International application number: PCT/JP2009/071546
(87) International publication number: WO 2010/074202

(56) References cited:
- WO-A1-2007/108426
- WO-A1-2008/093575
- JP-A- 2001 319 634
- JEONG Y-B ET AL: "Effect of thickness of coating layer on polymer-coated separator on cycling performance of lithium-ion polymer cells", JOURNAL OF POWER SOURCES, ELSEVIER SA, CH, vol. 128, no. 2, 5 April 2004 (2004-04-05) , pages 256-262, XP004495016, ISSN: 0378-7753, DOI: 10.1016/J.JPOWSOUR.2003.09.073

## Description

### TECHNICAL FIELD

The present invention relates to a separator for a lithium ion secondary battery having porous film, more precisely, to a separator for a lithium ion secondary battery having porous film which possibly contributes to improve smoothness and oxidation resistivity of the separator. Also, the present invention relates to a lithium ion secondary battery provided with said separator having porous film.

### BACKGROUND ART

In a practically applied battery, a lithium ion secondary battery has a highest energy density and has been widely used for, in particular, small sized electronic devices. Also, in addition to a small sized usage, it has been prospected for expanding usage for vehicles. In this matter, it has been desired for high capacity, long term durability and more improvement of safety of the lithium ion secondary battery.

A lithium ion secondary battery normally comprises an organic separator composed of polyolefin, such as polyethylene and polypropylene, in order to prevent short circuit between positive and negative electrodes. An organic separator composed of polyolefin has a physical property which melts at 200°C or less. Thus, when the battery tends to get higher by internal and/or external stimuli, volume change such as shrink or melt may occur, and as a result, there is a risk of explosion caused such as by short circuit of positive and negative electrodes or electrical energy release.

Therefore, in order to solve such problems, it is proposed to have nonconductive particles such as inorganic particles on the polyethylene organic separator.

For example, Patent Document 1 discloses a method comprising the steps of dispersing inorganic particles of BaTiO₃ powder and polyvinylidene fluoride-chlorotrifluoroethylene copolymer(PVDF-CTFE) in a dispersion medium and slurrying, then, coating the same on a polyethylene terephthalate made porous base material and drying. With this method, by including inorganic particles, thermal shrinkage of organic separator by heat of 150°C or more can be prevented however, wrinkles and the like may occur on organic separator when coating and drying the slurry including inorganic particles.

For example, Patent Document 2 discloses a separator with porous film formed by coating porous film slurry, comprising polyvinylidene fluoride and/or polyethyleneoxide and inorganic particles such as calcium carbonate, on polyethylene made organic separator. Patent Document 2 describes, when including inorganic particles, growth of lithium dendrite crystal (dendrite) at long cycle can be inhibited and electrical short circuit can be prevented. However, polyethyleneoxide used in this method is weak at high potential and its capacity will be severely deteriorated at long cycle or high-temperature operation.

Therefore, according to the Patent Documents 1 and 2, by forming porous film including nonconductive particles such as inorganic particles, electrical short circuit can be prevented and thermal shrinkage can be inhibited. However, deformation, such as wrinkles may be seen when forming porous film, including inorganic particles, on polyolefin organic separator, namely, film smoothness may be deteriorated. Further, by using the lithium ion secondary battery including said separator, long term cycle characteristic cannot be obtained.

### PRIOR ART DOCUMENTS

### Patent Documents

Patent Document 1: Japanese Laid Open Patent Publication (Tokuhyo) No. 2008-503049 (U.S. Laid-open Patent Publication No. 2006/8700)
Patent Document 2: Japanese Patent Laid Open (Tokkai) No. 2001-319634(U.S. Patent No.6432586)

EP 2 116 372 A1 discloses a multilayer porous membrane having both high safety and practicality, especially as a separator for a non-aqueous electrolyte battery and comprising a porous layer containing an inorganic filler and a resin binder on at least one surface of a polyolefin resin porous membrane, wherein the porous layer simultaneously satisfies the following (A) to (C):
(A) the inorganic filler has an average particle diameter of 0.1 µm or more and 3.0 µm or less,
(B) a ratio of an amount of the resin binder to a total amount of the inorganic filler and the resin binder is 1 % or more and 8 % or less in terms of volume fraction, and
(C) a ratio of a layer thickness of the porous layer to a total layer thickness is 15 % or more and 50 % or less.

### DISCLOSURE OF INVENTION

### PROBLEM TO BE SOLVED BY THE INVENTION

The present invention has been made in view of the above conventional technical arts; and a purpose of the invention is to provide a separator with a porous film used for a lithium ion secondary battery wherein said separator for a lithium ion secondary battery includes a binder, which is capable to contribute for film smoothness and long term cycle characteristic of the separator.

### MEANS FOR SOLVING THE PROBLEM

In order to solve the above-mentioned problem, as a result of intentional study by the present inventors, it has been found that deformation of a porous film including nonconductive particles can be prevented when the above-mentioned porous film including nonconductive particles such as inorganic particles includes a specific binder, thus, deformation of the organic separator can also be prevented which leads to a superior film smoothness, and further, long term cycle characteristic can be obtained when said binder has high oxidation stability, and the present invention has been achieved thereby.

The present invention to the above problem comprises following matters as gist.
(1) A separator for a lithium ion secondary battery characterized in that
   a porous film including nonconductive particles and a binder are laminated on an organic separator,
   said binder includes a copolymer comprising (meth)acrylonitrile monomer units and (meth)acrylic ester monomer units and the ratio of (meth)acrylonitrile monomer units and (meth)acrylic ester monomer units (= (meth)acrylonitrile monomer units/ (meth) acrylic ester monomer units in the copolymer of the binder is within the range of 5/95 to 50/50 by mass ratio
(2) The separator for a lithium ion secondary battery as set fourth in (1) wherein total content of (meth)acrylonitrile monomer units and (meth) acrylic ester monomer units in the copolymer of the binder is 50 mass% or more.
(3) The separator for a lithium ion secondary battery as set forth in any one of (1) or (2) wherein said binder is crosslinkable by heat or energy irradiation.
(4) The separator for lithium ion secondary battery as set forth in any one of (1) to (3) wherein said copolymer of the binder includes a thermal crosslinkable group and said thermal crosslinkable group is at least one selected from the group consisting of an epoxy group" N-methylol amide group and oxazoline group.
(5) The separator for a lithium ion secondary battery as set forth in any one of (1) to (4) wherein said copolymer of the binder further includes at least one kind of hydrophilic group selected from the group consisting of a carboxylic acid group, hydroxy group and sulfonic acid group.
(6) A manufacturing method of a separator for a lithium ion secondary battery characterized by comprising coating a slurry for a porous film comprising nonconductive particles, a binder including a copolymer comprising (meth)acrylonitrile monomer units and (meth)acrylic ester monomer units in which the ratio of (meth)acrylonitrile monomer units and (meth)acrylic ester monomer units (= (meth)acrylonitrile monomer units/ (meth) acrylic ester monomer units in the copolymer of the binder is within the range of 5/95 to 50/50 by mass ratio and a solvent on an organic separator, and drying the same.
(7) A lithium ion secondary battery comprising a positive electrode, a negative electrode, an electrolyte solution, and the separator as set forth in any one of (1) to (5).

### BEST MODE FOR WORKING THE INVENTION

Hereinafter, the present invention will be explained in detail.

A separator for a lithium ion secondary battery of the present invention is obtained by laminating a porous film, including nonconductive particles and binder, on an organic separator.

### (organic separator)

As for organic separator of the present invention, a porous film having fine pore diameter (microporous film), which does not show electron conductivity but shows ion conductivity and is highly resistant to organic solvent, is used. For instance, a microporous film formed from a resin such as a polyolefin (polyethylene, polypropylene, polybutene, and polyvinyl chloride); a mixture thereof and a copolymer thereof; a microporous film formed from a resin such as polyethyleneterephthalate, polycycloolefin, polyethersulfone, polyamide, polyimide, polyimideamide, polyaramid, polycycloolefin, nylon and polytetrafluoroethylene; a material woven by a polyolefin fiber or a nonwoven fabric of said fiber; and an assembly of insulating material particles can be exemplified. Above all, a microporous film formed from a polyolefin resin is preferable, in view of that it is capable of providing a superior coating property of slurry which includes nonconductive particles, and increasing capacity per volume by a thinner film thickness of separator leading to higher active material ratio in battery, which will be described later.

Thickness of the organic separator is normally 0. 5 to 40pm, preferably 1 to 30µm, and more preferably 1 to 10µm. Within this range, resistance of the separator in a battery decreases and workability of coating on the separator increases.

In the present invention, as for the polyolefin resin used for a material of an organic separator, a homopolymer of e.g. polyethylene and polypropylene, copolymer of the same and mixture thereof can be exemplified. As for polyethylene, ethylene with low, medium and high densities can be exemplified, however, considering picking strength and mechanical strength, a high density polyethylene is preferable. Further, for the purpose of providing softness, two or more kinds of said polyethylene can be mixed. As for the polymerization catalyst used for preparing said polyethylene, although there is no limitation particularly, Ziegler-Natta catalyst, Phillips catalyst and Metallocene catalyst are exemplified. In order to achieve a good balance between mechanical strength and high permeability, viscosity-average molecular weight of polyethylene is preferably a hundred thousand or more and 12 million or less, more preferably two hundred thousand or more and three million or less. As for polypropylene, homopolymer, random copolymer, block copolymer are exemplified, and it can be used by single or mixing two kinds or more. As for polymerization catalyst, although there is no limitation particularly, Ziegler-Natta catalyst and Metallocene catalyst are exemplified. As for stereoregularity, although there is no limitation particularly, isotactic, syndiotactic and atactic can be used, in particular, it is preferable to use isotactic polypropylene which is inexpensive. Further, within a capable range for preserving the effect of the invention, appropriate amount of additives such as polyolefin, other than polyethylene and polypropylene, antioxidant and astamuse can be added.

As for a manufacturing method of a polyolefin organic separator, conventionally known and used methods are used. As for said methods, for example; a dry method wherein a film is formed by melt extrusion of polypropylene and polyethylene, and the resulting film is annealed at a low temperature to grow crystal domain and extended to form microporous film by extending noncrystal region; and a wet method wherein a film is formed after mixing hydrocarbon medium and the other low molecular materials with polypropylene and polyethylene, and by removing said medium and said low molecular materials with more highly volatile medium from the resulting film where said medium and said low molecular materials are aggregated and island phase begins to appear, to form microporous film, are selected. In particular, dry method is preferable in view of that big voids are easily obtained in object to decrease the resistance.

The organic separator of the present invention, in object to control strength, hardness, and thermal shrinkage, is capable of including filler or fiber compounds other than nonconducting particles. Further, when laminating porous film layer including nonconductive particles and binder, in object to improve adhesion and to improve impregnation rate of solution by decreasing surface tension of electrolyte solution, surface of the organic separator can be coated with low or high molecular compound, and electromagnetic line treatment such as by ultraviolet rays or plasma treatment such as by corona discharge or plasma gas can be done in advance. In particular, it is preferable to coat with a high molecular compound including polar groups, such as carboxylic acid group, hydroxyl group and sulfonic acid group, in view of that it has high impregnation rate of electrolyte solution and is easy to obtain high adhesion with porous film including nonconductive particles and binder.

The organic separator of the present invention, in object to strengthen the tearing strength and picking strength, can be a multilayer structure of the above organic separators. In particular, a layered structure of polyethylene microporous film and polypropylene microporous film and a layered structure of nonwoven fiber and polyolefin group separator can be exemplified.

### (nonconductive particles)

As for nonconductive particles of the present invention, it is desirable to stably present under lithium ion secondary battery environment and also be electrochemically stable. For instance, all sorts of nonconductive inorganic and organic particles can be used.

As for the inorganic particles, oxide particles such as iron oxide, silicone oxide, aluminum oxide, magnesium oxide and titanium oxide; nitride particles such as aluminum nitride and boron nitride; covalent crystal particles such as silicon and diamond; poorly-soluble ion crystal particles such as barium sulfate, calcium fluoride and barium fluoride can be used. In accordance with necessity, these particles can be treated with element substitution, treated with surface treatment, or formed to a solid solution. Further, these particles can be used alone or in a combination of two or more kinds. In particular, oxide particles are preferable, since they are stable in electrolyte solution and have potential stability.

As for the organic particles, particles comprising various polymers such as polystyrene, polyethylene, polyimide, melamine resin, phenol resin can be used. Said polymers forming the particles can be a mixture, a modified form, a derivatized form, random copolymer, alternate copolymer, graft copolymer, block copolymer, a bridged form. The particles may comprise two or more kinds of polymers. Further, conducting metals, such as carbon black, graphite, SnO₂ ITO and metallic powder, compounds having conducting properties, and oxides of fine powder form can also be used by surface treating them with nonconductive materials and providing them with electrical insulation property. Two or more kinds of these nonconductive materials can be used in combination.

An average particle diameter (D50 average particle diameter of volume average) of nonconductive particles of the invention is preferably within a range of 5nm or more to 10µm or less, more preferably 10nm or more to 5µm or less. When the average particle diameter of the nonconductive particles is within said range, it will be easy to control the dispersing state and obtain predetermined uniform thickness of the film. In particular, the average particle diameter of the nonconductive particles is preferably within a range or 50nm or more to 2µm or less, which will be easy to disperse and coat and is superior to control voids.

It is desirable that the BET specific surface area of the particles is preferably within a range of 0.9 to 200 m²/g, more preferably 1.5 to 150m²/g, in view of inhibiting aggregation of the particles and optimizing the fluidity of the slurry.

Formation of the nonconductive material of the invention is not particularly limited, spherical type, needle type, rod type, spindle type, plate type or scale type, can be used; however, spherical type, needle type and spindle type are preferable. Further, porous particles can also be used.

The content amount of nonconductive particles in the porous film is preferably within a range of 5 to 99 mass%, more preferably 50 to 98 mass%. When the content amount of nonconductive particles in the porous film is within said range, a separator with porous film showing high thermal stability and strength can be obtained.

### (binder)

The binder of the invention includes a copolymer comprising (meth)acrylonitrile monomer units and (meth)acrylic ester monomer units. Said copolymer is obtained by copolymerizing at least a monomer providing (meth)acrylonitrile monomer units and a monomer providing (meth)acrylic ester monomer units. In the invention, "(meth)acrylic acid" means acrylic acid or methacrylic acid, and "(meth)acrylo" means acrylo or methacrylo.

As for the monomer providing (meth)acrylic ester monomer units, (meth)acrylic alkyl ester,(meth)acrylic perfluoro alkyl ester and (meth)acrylic ester, having functional group attached to a side chain, can be exemplified. Above all, (meth)acrylic alkyl ester is preferable. The carbon number of an alkyl group and perfluoro alkyl group which bind to a noncarbonyl oxygen atom of the (meth)acrylic alkyl ester and (meth) acrylic perfluoro alkyl ester is preferably 1 to 14, more preferably 1 to 5, in view of showing lithium ion conductivity by swelling to electrolyte solution and inhibiting cross-linking aggregation of polymer when dispersing small particle diameter.

As for the (meth)acrylic alkyl ester wherein the carbon number of an alkyl group and perfluoro alkyl group which bind to a noncarbonyl oxygen atom is 1 to 5, acrylic alkyl esters such as methyl acrylate, ethyl acrylate, n-propyl acrylate, isopropyl acrylate, n-butyl acrylate and t-butyl acrylate; acrylic 2-(perfluoro alkyl) ethyls such as acrylic 2-(perfluoro butyl) ethyl and acrylic 2-(perfluoro pentyl) ethyl; methacrylic alkyl esters such as methyl methacrylate, ethyl methacrylate, n-propyl methacrylate, isopropyl methacrylate, n-butyl methacrylate and t-butyl methacrylate; and methacrylic 2- (perfluoro alkyl) ethyls such as methacrylic 2-(perfluoro butyl) ethyl, methacrylic 2-(perfluoro pentyl) ethyl are exemplified.

As for the other (meth)acrylic alkyl esters, acrylic alkyl esters, wherein the carbon number of an alkyl group which binds to a noncarbonyl oxygen atom is 6 to 18, such as n-hexyl acrylate, 2-ethyl hexyl acrylate, nonyl acrylate, lauryl acrylate, stearyl acrylate, cyclohexyl acrylate and isobornyl acrylate; methacrylic alkyl esters, wherein the carbon number of an alkyl group which binds to a noncarbonyl oxygen atom is 6 to 18, such as n-hexyl methacrylate, 2-ethyl hexyl methacrylate, octyl methacrylate, isodecyl methacrylate, lauryl methacrylate, tridecyl methacrylate, stearyl methacrylate and cyclohexyl methacrylate; acrylic 2-(perfluoro alkyl) ethyls, wherein the carbon number of a perfluoro alkyl group which binds to a noncarbonyl oxygen atom is 6 to 18, such as 2-(perfluoro hexyl) ethyl acrylate, 2-(perfluoro octyl) ethyl acrylate, 2-(perfluoro nonyl) ethyl acrylate, 2-(perfluoro decyl) ethyl acrylate, 2-(perfluoro dodecyl) ethyl acrylate, 2-(perfluoro tetradecyl) ethyl acrylate, 2-(perfluoro hexadecyl) ethyl acrylate; and methacrylic 2-(perfluoro alkyl) ethyls, wherein the carbon number of a perfluoro alkyl group which binds to a noncarbonyl oxygen atom is 6 to 18, such as 2-(perfluoro hexyl) ethyl methacrylate, 2-(perfluoro octyl) ethyl methacrylate, 2-(perfluoro nonyl) ethyl methacrylate, 2-(perfluoro decyl) ethyl methacrylate, 2-(perfluoro dodecyl) ethyl methacrylate, 2-(perfluoro tetradecyl) ethyl methacrylate, 2-(perfluoro hexadecyl) ethyl methacrylate; can be exemplified.

As for the monomer providing a monomer unit of (meth)acrylonitrile of the invention, acrylonitrile and methacrylonitrile can be exemplified.

In the invention, the ratio of (meth)acrylonitrile monomer units and (meth) acrylic ester monomer units (=(meth)acrylonitrile monomer units /(meth)acrylic ester monomer units) in the copolymer is within the range of 5/95 to 50/50, more preferably 5/95 to 30/70, the most preferably 10/90 to 20/80 by mass ratio. When the mass ratio of (meth)acrylonitrile monomer units and (meth)acrylic ester monomer units is within the above-mentioned range, dissolution to the electrolyte solution will be prevented and deformation when coating on an organic separator becomes difficult to occur. Further, while keeping swellable property to electrolyte solution, it is difficult to dissolve at a high temperature; and it shows superior high-temperature property.

In the invention, the total content of (meth) acrylonitrile monomer units and (meth)acrylic ester monomer units in the copolymer is preferably 50 mass% or more, more preferably 60 mass% or more and the most preferably 75 mass% or more. When the total content of (meth)acrylonitrile monomer units and (meth)acrylic ester monomer units in the copolymer is within the above-mentioned range, dispersibility of nonconductive particles to a solvent used for slurry, which will be described hereinafter, and softness of the porous film can both be improved.

It is preferable that the binder of the invention is crosslinkable by heat or energy irradiation. When using a crosslinked binder, crosslinkable by heat or energy irradiation, the crosslink density can be controlled by the strength of heat or energy irradiation. Further, when the crosslink density is high, the degree of swelling becomes lower; hence the degree of swelling can be controlled by crosslink density.

A binder, crosslinkable by heat or energy irradiation, can be obtained when a crosslinking agent is contained in the binder and/or a crosslinkable group is contained in the copolymer forming the binder.

Above all, it is preferable when a crosslinking agent comprising thermal crosslinkable group is contained in a binder in addition to the copolymer forming the binder and/or a thermal crosslinkable group is contained in the copolymer forming the binder, because a porous film can be crosslinked by thermal treatment after forming the porous film and dissolving to an electrolyte solution can be prevented, and hence a strong and soft porous film can be obtained.

When a crosslinking agent comprising a crosslinkable group is contained in a binder, in addition to the copolymer forming the binder, said crosslinking agent is not particularly limited, however; organic peroxide, crosslinking agents that are effective with heat or light are used. Above all, an organic peroxide and crosslinking agents that are effective with heat are preferable, because a thermal crosslinkable group is contained.

As for the organic peroxide, ketone peroxides such as methylethylketone peroxide and cyclohexanone peroxide; peroxy ketals such as 1,1-bis(t-butylperoxy)3,3,5-trimethylcyclohexane and 2,2-bis(t-butylperoxy)butane; hydroperoxides such as t-butyl hydroperoxide and 2,5-dimethylhexane-2,5-dihydroperoxide; dialkylperoxides such as dicumyl peroxide, 2,5-dimethyl-2,5-di(t-butylperoxy)hexine-3 and α,α'-bis(t-butylperoxy-m-isopropyl)benzene; diacylperoxides such as octanoylperoxide and isobutyrylperoxide; and peroxyesters such as peroxydicarbonate; can be exemplified. Above all, considering the property of the crosslinked resin, dialkylperoxides are preferable; and it is preferable to vary the alkyl group according to the forming temperature.

Although crosslinking agents (curing agents) that are effective with heat are not particularly limited if it is possible to cause crosslinking reaction by heat, diamine, triamine and the other aliphatic polyamine, alicyclic polyamine, aromatic polyaminebisazide, acid anhydride, diol, polyhydric phenol, polyamide, diisocyanate and polyisocyanate can be exemplified. As for specific examples, aliphatic polyamines such as hexamethylendiamine, triethylenetetramine, diethylene triamine and tetraethylenepentamine; alicyclic polyamines such as diaminocyclohexane and 3 (4), 8(9) -bis(aminomethyl)tricycle[5.2.1.0^{2,6}]decane; alicyclic polyamines such as 1,3-(diaminomethyl) cyclohexane, menthanediamine, isophoronediamineN-aminoethylpiperazine, bis(4-amino-3-methylcyclohexyl)methane and bis(4-aminocyclohexyl)methane; aromatic polyamines such as 4,4'-diaminodiphenylether, 4,4'-diaminodiphenylmethane, α,α'-bis(4-aminophenyl)-1,3-diisopropylbenzene, α,α'-bis(4-aminophenyl)-1,4-diisopropylbenzene, 4,4'-diaminodiphenylsulfone and metaphenylenediamine; bisazides such as 4,4'-bisazidbenzal(4-methyl)cyclohexanone, 4,4'-diazidchalcone, 2,6-bis(4'-azidbenzal)cyclohexanone, 2,6-bis(4'-azidbenzal)-4-methyl-cyclohexanone, 4,4'-diazidediphenylsulfone, 4,4'-diazidediphenylmethane and 2,2'-diazidestilbene; anhydrides such as phthalic anhydride, pyromellitic anhydride, benzophenone tetracarboxylic anhydride, nadic anhydride, 1,2-cyclohexane dicarboxylic acid, maleic anhydride modified polypropylene and maleic anhydride modified norbornene resin; dicarboxylic acids such as fumaric acid, phthalic acid, maleic acid, trimellitic acid and himic acid; diols such as 1,3'-butanediol, 1,4'-butanediol, hydroquinonedihydroxydiethylether and tricyclodecanedimethanol; triols such as 1,1,1-trimethylolpropane; polyphenols such as phenol novolac resin and cresol novolac resin; polyalcohols such as tricyclodecanediol, diphenylsilanediol, ethylene glycol and its derivatives, diethylene glycol and its derivatives and triethylene glycol and its derivatives; polyamides such as nylon-6, nylon 66, nylon 610, nylon 11, nylon 612, nylon 12, nylon 46, methoxymethylated polyamide, polyhexamethylenediamineterephthalicamide and polyhexamethyleneisophthalicamide; diisocyanates such as hexamethylenediisocyanate and toluylenediisocyanate; polyisocyanates such as dimer or trimer of diisocyanates and diols or triols of diisocyanate adducts; and blocked isocyanates wherein isocyanate is protected by block agent are exemplified.

These can be used by single or mixing two kinds or more. Above all, aromatic polyamines, anhydrides, polyhydric phenols, polyhydric alcohols are preferable, because they provide a porous film with superior strength and adhesion property. In particular, 4,4-diamino diphenylmethane(aromatic polyamine), maleic anhydride modified norbornene resin (anhydride) and polyhydric phenols are more preferable.

Although the crosslinking agents (curing agents) that are effective with light are not particularly limited if they are photoreactive compounds which produce crosslinked compounds by irradiating active light rays including ultraviolet rays, such as g-line, h-line and i-line, far ultraviolet rays, x-ray and electron ray, and reacting with the copolymer of the invention, aromatic bisazide compound, photoamine generating agent, photoacid generating agent are exemplified.

As for aromatic bisazide compounds, 4,4'-diazidechalcone, 2,6-bis (4'-azidbenzal)cyclohexanone, 2,6-bis(4'-azidbenzal)4-methylcyclohexanone, 4,4'-diazidediphenylsulfone, 4,4'-diazidebenzophenone, 4,4'-diazidediphenyl, 2,7-diazidefluorene, 4,4'-diazidephenylmethane are typical examples. These can be used by single or mixing two kinds or more.

As for photoamine generating agents, aromatic amines and aliphatic amines of o-nitrobenzyloxycarbonylcarbamate, 2,6-dinitrobenzyloxycarbonylcarbamate, and α,α-dimethyl-3,5-dimethoxybenzyloxycarbonylcarbamate are typical examples. In particular, o-nitrobenzyloxycarbonylcarbamates of aniline, cyclohexylamine, piperidine, hexamethylendiamine, triethylenetetramine, 1,3-(diaminomethyl)cyclohexane, 4,4'-diaminodiphenylether, 4,4'-diamino diphenylmethane, and phenylenediamine can be exemplified. These can be used by single or mixing two kinds or more.

As for photoacid generating agents, which produce a Broensted or Lewis acid by irradiating active light rays, onium salt, halogenated organic compound, quinonediazide compound, α,α-bis(sulfonyl)diazomethane compounds, α-carbonyl-α-sulfonyl-diazomethane compounds, sulfone compound, organic acid ester compound, organic acid amido compound and organic acid imido compound can be exemplified. These compounds, capable of producing acids by cleavage occurred when irradiating active light rays can be used by single or mixing two kinds or more.

Said crosslinking agents can be used by single or mixing two kinds or more. Compounding amounts of the crosslinking agents are normally 0.001 to 30 parts by-mass, preferably 0.01 to 25 parts by mass, more preferably 1 to 20 parts by mass, per 100 parts by mass of copolymer of the invention. When the compounding amount of crosslinking agents is within said range, properties such as crosslinking property, lithium conductivity of crosslinking material in electrolyte solution, dissolving property of electrolyte solution and strength of porous film are highly balanced, which is preferable.

When using crosslinking agents in the invention, it is preferable to use crosslinking aids (curing aids) which are capable to further improve crosslinking property and dispersibility of the compounding agent. The crosslinking aid of the invention is not particularly limited and can be conventionally known aid disclosed in Japanese Laid-open Patent Application (Tokkaishow)No. 62-34924, oxime·nitroso crosslinking aids such as quinonedioxime, benzoquinonedioxime and p-nitroso phenol; maleimide crosslinking aids such as N,N-m-phenylenebis maleimide; allyl crosslinking aids such as diallylphthalate, triallylcyanurate, triallylisocyanurate; methacrylate crosslinking aids such as ethyleneglycol dimethacrylate and trimethylolpropane trimethacrylate; vinyl crosslinking aids such as vinyl toluene, ethylvinyl benzene and divinyl benzene are exemplified. Above all, allyl crosslinking aid and methacrylate crosslinking aid are preferable, in view of that they are capable for uniform dispersion.

Although the additive amount of the crosslinking aids can be suitably varied according to the type of crosslinking agent, it is normally 0.1 to 10 parts by mass, preferably 0.2 to 5 parts by mass, per 1 part by mass of crosslinking agent. When the additive amount of crosslinking aid is too small, crosslinking is difficult to occur, to the contrary, when it is too much, there is a risk to reduce lithium conductivity and water resistance of the crosslinked binder.

When a thermal crosslinkable group is contained in the copolymer forming a binder, said thermal crosslinkable group is preferably at least one kind selected from the group consisting of epoxide group, N-methylolamido group and oxazoline group. Above all, epoxide group can easily control crosslinking and crosslink density, which is preferable.

When preparing said copolymer, a thermal crosslinkable group can be introduced into the copolymer by copolymerizing a monomer providing (meth)acrylonitrile monomer units, a monomer providing (meth)acrylic ester monomer units, a monomer including a thermal crosslinkable group and, if necessary, other monomers polymerizable with the above monomers.

As for monomers including an epoxide group, a monomer including a carbon-carbon double bond and an epoxide group and a monomer including a halogen atom and an epoxide group can be exemplified.

As for a monomer including a carbon-carbon double bond and an epoxide group, unsaturated glycidyl ethers such as vinylglycidyl ether, allylglycidyl ether, butenylglycidyl ether and o-allylphenylglycidyl ether; monoepoxides of diene or polyene such as butadiene monoepoxide, chloroprene monoepoxide, 4,5-epoxy-2-pentene, 3,4-epoxy-1-vinyl cyclohexene and 1,2-epoxy-5,9-cyclododecadiene; alkenyl epoxides such as 3,4-epoxy-1-butene, 1,2-epoxy-5-hexene and 1,2-epoxy-9-decene; glycidylesters of unsaturated carboxylic acid such as glycidyl acrylate, glycidyl methacrylate, glycidyl crotonate, glycidyl-4-heptanoate, glycidyl sorbate, glycidyl linoleate, glycidyl-4-methyl-3-pentenoate, glycidyl ester of 3-cyclohexene carboxylic acid, and glycidyl ester of 4-methyl-3-cyclohexene carboxylic acid can be exemplified.

As for a monomer including a halogen atom and an epoxide group, epihalohydrins such as epichlorohydrin, epibromohydrin, epiiodohydrin, epifluorohydrin and β-methylepichlorohydrin; p-chlorostyrene oxide; and dibromophenylglycidylether can be exemplified.

As for a monomer including a N-methylolamido group, (meth)acrylamides which include methylol group such as N-methylol(meth)acrylamide can be exemplified.

As for a monomer including an oxazoline group, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline and 2-isopropenyl-5-ethyl-2-oxazoline can be exemplified.

The thermal crosslinkable group containing amount in the copolymer, namely, the thermal crosslinkable group containing monomer amount when polymerizing, is preferably within a range of 0.1 to 10 mass%, more preferably 0.1 to 5 mass%, per 100 mass% of whole unit of monomer. The thermal crosslinkable group containing amount in the copolymer can be controlled by charging rate of monomer when preparing copolymer forming binder. When the thermal crosslinkable group containing amount in the copolymer is within said range, dissolution to electrolyte solution can be prevented and it is possible to obtain superior porous film strength and long term cycle characteristic.

In the invention, it is preferable that the copolymer used as binder further comprises at least one kind of hydrophilic group selected from the group consisting of carboxylic group, hydrophilic group and sulfonic group. When copolymer includes said hydroxyl group, dispersion stability of nonconductive particles and binding ability between nonconductive particles can both be improved. Further, since the surface of nonconductive particles is likely to show hydrophilic ability, binder is likely to be adsorbed to the surface of nonconductive particles when said binder includes a hydrophilic group; and thus, dispersion of nonconductive particles improves and a smooth porous film can.be obtained on the organic separator.

The hydrophilic group is at least one selected from the group consisting of carboxylic group, hydroxyl group and sulfonic group. Above all, sulfonic group and carboxylic group are preferable, because they are capable of improving dispersion and binding ability of nonconductive particles.

When preparing said copolymer, a hydrophilic group can be introduced by copolymerizing a monomer providing (meth)acrylonitrile monomer units, a monomer providing (meth) acrylic ester monomer units, a monomer including a hydrophilic group and, if necessary, other monomers copolymerizable with the above monomers.

As for a monomer including a carboxylic group, monocarboxylic acid and its derivatives and dicarboxylic acid and its anhydrides and derivatives can be exemplified.

As for the monocarboxylic acid, acrylic acid, methacrylic acid and crotonic acid are exemplified. As for monocarboxylic acid derivatives, 2-ethylacrylic acid, isocrotonic acid, α-acetoxyacrylic acid, β-trans-aryloxyacrylic acid, α-chloro-β-E-methoxyacryalic acid and β-diaminoacrylic acid can be exemplified.

As for the dicarboxylic acid, maleic acid, fumaric acid and itaconic acid can be exemplified.

As for the dicarboxylic acid anhydrides, maleic acid anhydride, acrylic acid anhydride, methylmaleic acid anhydride and dimethylmaleic acid anhydride can be exemplified.

As for the dicarboxylic acid derivatives, maleic derivatives such as methyl maleic acid, dimethyl maleic acid, phenyl maleic acid, chloro maleic acid, dichloro maleic acid and fluoro maleic acid; maleate such as methylallyl maleate, diphenyl maleate, nonyl maleate, decyl maleate, dodecyl maleate, octadecyl maleate and fluoro alkyl maleate can be exemplified.

As for the monomer including a hydroxyl group, unsaturated ethylenic alcohol such as, (meth)allyl alcohol, 3-buten-1-ol and 5-hexen-1-ol; alkanol esters of unsaturated ethylenic carboxylic acid such as, acrylic acid-2-hydroxyethyl, acrylic acid-2-hydroxypropyl, methacrylic acid-2-hydroxyethyl, methacrylic acid-2-hydroxypropyl, maleic acid-di-2-hydroxyethyl, maleic acid di-4-hydroxybutyl and itaconic acid di-2-hydroxypropyl; esters of polyalkylene glycol and (meth)acrylic acid shown by a generic formula CH₂=CR¹-COO-(CₙH₂ₙO)ₘ-H(m is integral number of 2 to 9, n is integral number of 2 to 4, R¹ is hydrogen or methyl group) ; mono(meth)acrylate esters of dihydroxy ester of dicarboxylic acid such as 2-hydroxyethyl-2'-(meth)acryloyl oxyphthalate and 2-hydroxyethyl-2'-(meth)acryloyl oxysuccinate; vinyl ethers such as 2-hydroxyethylvinylether and 2-hydroxypropylvinylether; mono (meth) allyl ethers of alkylene glycol such as (meth)allyl-2-hyroxyethyl ether, (meth)aryl-2-hydroxypropyl ether, (meth)allyl-3-hydroxypropyl ether, (meth)allyl-2-hydroxybutyl ether, (meth)allyl-3-hydroxybutyl ether, (meth) allyl-4-hydroxybutyl ether and (meth)allyl-6-hydroxyhexyl ether; polyoxyalkyleneglycol(meth)monoallyl ether such as, diethyleneglycol mono(meth)allyl ether and dipropylene glycolmono(meth)allyl ether; mono(meth)allyl ether of halogen and hydroxy substituent of (poly) alkylene glycol such as, glycerin mono(meth)allyl ether, (meth) allyl-2-chloro-3-hydroxypropyl ether and (meth)allyl-2-hydroxy-3-chloropropyl ether; mono(meth)allyl ethers of polyphenol, such as eugenol and isoeugenol, and halogen substitute thereof; (meth)allylthio ethers of alkylene glycol such as (meth)allyl-2-hydroxyethylthio ether and (meth)allyl-2-hydroxypropylthio ether are exemplified.

Also, as for the monomer comprising a sulfonic acid group, vinyl sulfonic acid, methylvinyl sulfonic acid, (meth)allyl sulfonic acid, styrene sulfonic acid, (meth)acrylic acid-2-sufonic acid ethyl, 2-acrylamide-2-methylpropane sulfonic acid and 3-allyloxy-2-hydroxypropane sulfonic acid are exemplified.

Above all, sulfonic group and carboxylic group are preferable, because they are capable of improving dispersion and binding ability of nonconductive particles.

The hydrophilic group containing amount in the copolymer, in terms of hydrophilic group containing monomer amount when polymerizing, is preferably within a range of 0.1 to 40 mass%, more preferably 0.5 to 20 mass%, per 100 mass% of whole unit of monomer. The hydrophilic group containing amount in the copolymer can be controlled by charging the rate of monomer when preparing copolymer forming binder. When the hydrophilic group containing amount in the copolymer is within said range, a better dispersion of nonconductive particles can be provided.

It is preferable that the copolymer used as binder of the invention may include, other than a monomer providing (meth)acrylonitrile monomer units and a monomer providing (meth)acrylic ester monomer units, said hydrophilic group and thermal crosslinkable group. When the copolymer includes said hydrophilic group and thermal crosslinkable group, crosslinking density is likely to be improved, and thus, a high-strength porous film can be obtained.

The copolymer used as binder of the invention may include, other than said monomers, monomers copolimarizable with said monomers. As for the other monomers copolimarizable with said monomers, styrene type monomer such as styrene, chlorostyrene, vinyl toluene, t-butyl styrene, methyl vinyl benzonate, vinyl naphthalene, chloromethyl styrene, α-methyl styrene and divinylbenzene; olefins such as ethylene and propylene; diene type monomer such as butadiene and isoprene; halogen atoms containing monomer such as vinyl chloride and vinylidene chloride; vinyl esters such as vinyl acetate, vinyl propionate and vinyl butyrate ; vinyl ethers such as methylvinyl ether, ethylvinyl ether and butylvinyl ether; vinyl ketones such as methylvinyl ketone, ethylvinyl ketone, butylvinyl ketone, hexylvinyl ketone and isopropenylvinyl ketone; heterocycle ring containing vinyl compounds such as N-vinyl pyrolidone, vinyl pyridine and vinyl imidazole; amide type monomer such as acrylamide, N-methylol acrylamide and acrylamide-2-methyl propane sulfonic acid can be exemplified.

The Manufacturing method of said copolymer is not particularly limited, and any method such as solution polymerization method, suspension polymerization method, bulk polymerization method and emulsion polymerization method can be used. As for the polymerization method, any method such as ion polymerization, radical polymerization and living radical polymerization method can be used. As for the polymerization initiator used for polymerization, for example, organic peroxide such as lauroyl peroxide, diisopropyl peroxydicarbonate, di-2-ethylhexyl peroxydicarbonate, t-butyl peroxypivalate and 3,3,5-trimethyhexanoil peroxide, azo compound such as α,α'-azobisisobutylnitrile and the like, or ammonium persulfate and potassium persulfate can be exemplified.

In the invention, the glass-transition temperature of said copolymer used as binder is preferably 15°C or less and more preferably 0°C or less, in view of that softness can be provided to the porous film at room temperature and also cracks when roll winding or rolling up and chips of porous film can be prevented. The glass-transition temperature of said copolymer can be suitably varied according to the rate of monomers used when forming the copolymer.

The content amount of binder in the porous film is preferably within a range of 0.1 to 10 mass%, more preferably 0.5 to 5 mass%, the most preferably 0.5 to 3 mass%. When the content of binder in the porous film is within said range, it is capable of maintaining binding ability between nonconductive particles and binding ability to an organic separator and softness, without disturbing Li movement, and preventing increase of resistance.

In the porous film, other components such as dispersing agent, leveling agent, deforming agent and electrolyte solution additives, functional to prevent decomposition of electrolyte solution, may be included. These are not particularly limited if it does not influence to battery reaction.

As for a dispersing agent, an anionic compound, cationic compound, non-ionic compound and polymer compound are exemplified. Said dispersing agent can be selected according to nonconductive particles used. The content amount of dispersing agent in the porous film is preferably outside of a range which affects battery property, and 10 mass% or less, in particular.

As for a leveling agent, surface active agents such as alkyl type surface active agent, silicone type surface active agent, fluorine type surface active agent and metal type surface active agent are exemplified. By mixing said surface active agent, repellent at coating process can be prevented and smoothness of an electrode can be improved. As for other components, nanoparticulate such as fumed silica and alumina are exemplified. By mixing said nanoparticulate, thixotropy of the slurry for forming porous film can be controlled, leveling property of the obtained porous film can be improved further thereby.

The content amount of the leveling agent in the porous film is preferably outside of a range which affects battery property, and 10 mass% or less, in particular.

### (manufacturing method of a separator for lithium-ion secondary battery)

As for the manufacturing method of a separator for a lithium-ion secondary battery of the invention, 1) coating the below mentioned slurry for a porous film on an organic separator, and drying the same; 2) immersing the organic separator to the below mentioned slurry for a porous film, and drying the same; 3) coating the below mentioned slurry for a porous film on a release film, making a film, then the obtained porous film is transferred to an organic separator are exemplified. Above all, 1) a coating slurry for a porous film on an organic separator, and drying the same is likely to control film thickness of the porous film, which is the most preferable.

A manufacturing method of a separator for lithium ion secondary battery of the invention is characterized by comprising; coating a slurry for a porous film comprising nonconductive particles, a binder including a copolymer comprising (meth) acrylonitrile monomer units and (meth) acrylic ester monomer units, and a solvent on an organic separator, and drying the same.

The slurry for a porous film of the invention comprises nonconductive particles, a binder including a copolymer comprising (meth)acrylonitrile monomer and (meth)acrylic ester monomer, and a solvent.

As for nonconductive particles and binder, examples defined in the above porous film are used.

The solvent is not particularly limited if it is possible to uniformly disperse the above-mentioned solid contents (nonconductive particles and binder).

As for the solvent used for a slurry for a porous film, either water or organic solvent can be used. As for the organic solvent, aromatic hydrocarbons such as benzene, toluene, xylene and ethylbenzene, chlorinated aliphatic hydrocarbon such as methylenechloride, chloroform and carbon tetrachloride are exemplified. For the other solvent, pyridine, acetone, dioxane, dimethyl formamide, methylethyl ketone, diisopropyl ketone, cyclohexanone, tetrahydrofuran, n-butyl phthalate, methyl phthalate, ethyl phthalate, tetrahydrofurfuryl alcohol, ethyl acetate, butyl acetate, 1-nitropropane, carbon disulfide, tributyl phosphate, cyclohexane, cyclopentane, xylene, methylcyclohexane ethylcyclohexane and N-methyl pyrolidone are exemplified. These solvents can be used by single or mixture solvent.

These solvent can be used by single or mixture mixing two kinds or more. Above all, a solvent having a superior dispersibility of nonconductive particles, a low boiling point and a high volatility is preferable, in view of that the solvent can be removed in a short time at a low temperature. Specifically, acetone, cyclohexanone, cyclopentane, tetrahydrofuran, cyclohexane, xylene, water, N-methyl pyrolidone and a mixture solvent of these are preferable. Further, cyclohexanone, xylene, N-methyl pyrolidone and a mixture solvent of these are more preferable, in view of that, they have a low volatility and excellent working ability in slurry coating process.

Although the solid content concentration of the slurry for a porous film is not particularly limited unless capable to perform the above coating and immersion, and has viscosity which shows fluidity, it is normally 20 to 50 mass%.

The manufacturing method of a slurry for a porous film of the invention is not particularly limited and can be obtained by mixing nonconductive particles, a binder including a copolymer comprising (meth) acrylonitrile monomer units and (meth) acrylic ester monomer units, solvent and the other component added when necessary.

As a mixing apparatus, it is not particularly limited if the above-mentioned components can be mixed uniformly, and a ball mill, a sand mill, a pigment dispersing machine, a grinder, an ultrasonic dispersion machine, a homogenizer, a planetary mixer can be used; in particular, it is preferable to use a high dispersion machine such as a bead mill, a roll mill and Fill mix which is capable to provide high dispersion share. The slurry viscosity in the state of a slurry for a porous film is in a range of 50mPa·S to 10, 000mPa·S, preferably 50 to 500mPa· S, in view of uniform coating and tempostability of the slurry. Said viscosity is a value when it is measured at 25°C and rotation speed 60rpm by using B type viscometer.

A method for coating the slurry for a porous film on the organic separator is not particularly limited. For example, the doctor blade method, the dip method, the revers roll method, the direct roll method, the gravure method, the extrusion method and the brush application method are exemplified. In these, the dip method and gravure method are preferable in view of that a uniform porous film can be obtained. As for the drying method, for example, drying by warm air, hot air, low humid air, vacuum drying, drying methods by irradiating (far)infrared radiation and electron beam are exemplified. The drying temperature is changed according to a kind of used solvent. For example, for removing the solvent completely, in case of using a solvent having low volatility such as N-methylpyrrolidone, it is preferable to dry by a blow dryer at high temperature of 120°C or more. Contrary to this, in case of using a solvent having high volatility, it can be dried at a low temperature of 100°C or less.

A thickness of the obtained porous film is not particularly limited, and can be set appropriately in accordance with a kind of the lithium ion secondary battery where the porous membrane is used. When it is too thin, a uniform film cannot be formed, also when it is too thick, a capacity per volume (mass) in the battery is decreased, therefore 0.1 to 50µm is preferred, 0.2 to 10µm is more preferred and 0.5 to 10µm is the most preferred.

The porous film formed on the organic separator is manufactured by binding nonconductive particles with binder and has a structure wherein voids are formed between nonconductive particles. Electrolyte solution is capable of penetrating in said voids; therefore, battery reaction is not inhibited.

In the invention, the surface of the organic separator wherein the porous film is formed is not particularly limited. The porous film may be formed on any surface of positive electrode and negative electrode of the secondary battery, and it can also be formed on both surfaces of positive and negative electrodes.

### (lithium ion secondary battery)

A lithium ion secondary battery of the invention comprises a positive electrode, a negative electrode, an electrolyte solution and separator; and said separator is the separator for the lithium ion secondary battery of the invention

The positive and the negative electrodes are generally composed of electrode active material layer, essentially including electrode active material, adhered to a collector.

### (electrode active material)

For the electrode active material used for the lithium ion secondary battery, any compounds can be used if it is available to charge and discharge lithium ion reversibly by applying electric potential in an electrolyte, and inorganic and organic compounds may be used.

An electrode active material for a positive electrode (positive electrode active material) of the lithium ion secondary battery is classified into two broad categories, namely of inorganic compound and organic compound. As for the positive electrode active material, transition metal oxide, complex oxide of lithium and transition metal and transition metal sulphide are exemplified. As for the above-mentioned transition metal, Fe, Co, Ni and Mn are used. As specific examples of the inorganic compound used for the positive electrode active material, lithium containing complex metal oxides such as LiCoO₂, LiNiO₂, LiMnO₂, LiMn₂O₄, LiFePO₄ and LiFeVO₄, like, transition metal sulphide such as TiS₂, TiS₃ and amorphous MoS₂, transition metal oxides such as Cu₂V₂O₃, amorphous V₂O-P₂O₅, MoO₃, V₂O₅ V₆O₁₃ are exemplified. These compounds may be subjected to elemental substitution partially. As for the positive electrode active material composed of the organic compound, conductive polymers such as polyacetylene and poly-p-phenylene can be exemplified. Ferrous oxide which has poor electric conductivity may be used as an electrode active material covered with a carbon material by reduction firing under the presence of a carbon source. Also, these compounds may be subjected to elemental substitution partially.

A positive electrode active material for the litthium ion secondary battery may be a mixture of the above-mentioned inorganic compounds and organic compounds. Although a particle diameter of the positive electrode active material is suitably selected in view of balance with other constitutional element of the battery, 50% accumulated volume diameter is normally 0.1 to 50µm, preferably 1 to 20µm, in view of improving battery property, such as a load property and cyclic property. When the 50% accumulated volume diameter is within this range, a secondary battery having large discharge and charge amount can be obtained, and it is easy for handling when producing the slurry for electrode and coating the slurry to form electrode. The 50% accumulated volume diameter can be determined by measuring particle size distribution with laser diffraction.

As for an electrode active material for a negative electrode (negative electrode active material) of the lithium ion secondary battery, carbonaceous materials such as, amorphous carbon, graphite, natural graphite, meso carbon micro beads and pitch base carbon fiber, conductive polymer such as polyacene can be exemplified. Also, as for the negative electrode active material, metals such as silicon, tin, zinc, manganese, iron, nickel, and alloys thereof, oxides, sulfates of said metals or alloys thereof are used. Additionally, metallic lithium, lithium alloy such as Li-Al, Li-Bi-Cd and Li-Sn-Cd, lithium transitional metal nitrides and silicon can be used. An electrode active material on which conductivity improver is adhered by a mechanical modifying method can be used also. Although a particle diameter of the negative electrode active material is suitably selected in view of balance with other constitutional element of the battery, 50% accumulated volume diameter is normally 1 to 50µm, preferably 15 to 30µm, in view of improving battery properties, such as initial efficiency, a load property and cyclic property.

In the invention, the electrode active material layer preferably includes binder (hereinafter sometimes referred as "binder for active material layer") other than electrode active material. When a binder for active material layer is included, binding ability of electrode active material layer in electrode improves; strength to mechanical force, acting in a process of rolling up the electrode, increases; and further, electrode active material layer in electrode becomes difficult to be removed, therefore, there will be a small risk for short-circuit caused by removed materials.

As for the binder for active material layer, various resin components can be used. For example, polyethylene, polytetrafluoroethylene (PTFE), polyvinylidene fluoride (PVDF), tetrafluoroethylene-hexafluoropropylene copolymer (FEP), polyacrylic acid derivative and polyacrylonitrile derivative can be used. They can be used by single or combination of two or more kinds.

Further, soft polymers exemplified below can be used as binder for active material layer.

Acrylic type soft polymer, which is a homopolymer of acrylic acid or methacrylic acid derivatives or copolymer of said homopolymer and a monomer copolymerizable therewith, such as polybutylacrylate, polybutylmethacrylate, polyhydroxyethyl methacrylate, polyacrylamide, polyacrylonitrile, butylacrylate/styrene copolymer, butylacrylate/acrylonitrile copolymer, and butylacrylate/acrylonitrile/glycidylmethacrylate copolymer;
isobutylene type soft polymer such as polyisobutylene, isobutylene/isoprene rubber, and isobutylene/styrene copolymer;
diene type soft polymer, such as polybutadiene, polyisoprene, butadiene/styrene random copolymer, isoprene/styrene random copolymer, acrylonitrile/butadiene copolymer, acrylonitrile/butadiene/styrene copolymer, butadiene/styrene block copolymer, styrene/butadiene/styrene block copolymer, isoprene/styrene block copolymer and styrene/isoprene/styrene block copolymer;
silicon containing soft copolymer such as dimethyl polysiloxane, diphenyl polysiloxane and dihydroxy polysiloxane; and the like;
olefinic soft polymer such as liquid polyethylene, polypropylene, poly-1-butene, ethylene/α-olefin copolymer, propylene/α-olefin copolymer, ethylene/propylene/diene copolymer (EPDM) and ethylene/propylene/styrene copolymer;
vinyl type soft polymer such as polyvinyl alcohol, polyvinyl acetate, polyvinyl stearate and vinyl acetate/styrene copolymer;
epoxy type soft polymer such as polyethylene oxide, polypropylene oxide and epichlorohydrin rubber;
fluorine containing soft polymer such as vinylidene fluoride rubber and polytetra-fluoroethylene-propylene rubber;
other soft polymer such as natural rubber, polypeptide, protein, polyester type thermoplastic elastomer, vinyl chloride type thermoplastic elastomer and polyamide type thermoplastic elastomer are are exemplified. These soft polymers may contain crosslinking structure, and functional groups may be added by modification.

The amount of binder for the active material layer in the electrode active material layer is preferably 0.1 to 5 parts by mass, more preferably 0.2 to 4 parts by mass, particularly preferably 0.5 to 3 parts by mass per 100 parts by mass of the electrode active material. When the amount of binder for the active material layer in the electrode active material layer is within the above range, disengagement of the active material from the electrode can be prevented without inhibiting battery reaction.

The binder for active material layer is prepared as solution or dispersion liquid for producing the electrode. The viscosity at this time is normally in a range of 1mPa · S to 300,00mPa · S, preferably 50mPa · S to 10,000mPa · S. Said viscosity is a value when it is measured at 25°C and rotation speed 60rpm by using B type viscometer.

In the invention, the electrode active material layer may include conductivity improver or reinforcement material. As for the conductivity improver, conductive carbon such as, acetylene black, ketchen black, carbon black, graphite, vapor phase growth carbon fiber and carbon nanotube can be used. Carbon powder such as graphite, fiber and foil of various metals are also exemplified. As for reinforcement material, various organic and inorganic spherical type, plate type, rod type and fiber type filler can be used. By using the conductivity improver, electric contact of each electrode active materials can be improved which contribute to improve discharge rate property when used to a lithium ion secondary battery. The amount of the conductivity improver is normally 0 to 20 parts by mass, preferably 1 to 10 parts by mass per 100 parts by mass of the electrode active material.

The electrode active material layer may be used alone but it is adhered to a collector.

The electrode active material layer is formed by adhering slurry (hereinafter sometimes referred as "composite material slurry"), including electrode active material and solvent, to a collector.

When a binder for the active material layer is included in the electrode active material layer, a solvent capable to dissolve said binder or disperse the same finely may be used, however, the solvent capable to dissolve said binder is preferable. When the solvent capable to dissolve said binder for active material layer is used, the binder for the active material layer adheres on a surface stabilizing the dispersion of electrode active material.

Normally, the composite material slurry contains a solvent to disperse the electrode active material, a binder for the active material layer and a conductivity improver. As for the solvent, it is preferable to use a solvent which is capable to dissolve said binder, because it has excellent dispersibility for the electrode active material and conductivity improver. It is expected that, the binder for the active material layer is adhered on a surface of the electrode active material and the like to thereby stabilize the dispersion by its volume effect when using the binder for the active material layer dissolved in the solvent.

As for the solvent used for the composite material slurry, either water or organic solvent can be used. As for the organic solvent, cycloaliphatic hydrocarbons, such as cyclopentane and cyclohexane; aromatic hydrocarbons such as toluene and xylene, ketones such as ethyl methyl ketone and cyclohexanone, esters such as ethylacetate, butylacetate, γ-butyrolactone and ε-caprolactone; acylonitriles such as acetonitrile and propionitrile; ethers such as tetrahydrofuran and ethyleneglycoldiethylether; alcohols such as methanol, ethanol, isopropanol, ethylene glycol and ethyleneglycolmonomethylether; amides such as N-methylpyrrolidone and N,N-dimethyl formamide are exemplified. These solvents can be used suitably selected in view of drying speed and environment by single or mixing two kinds or more. In the present embodiment, it is preferable to use a nonaqueous solvent, in view of swelling characteristic of the electrode to water.

Additives such as viscosity improver can be added to the composite material slurry by which various functions can be realized. As for the viscosity improver, a polymer soluble in the organic solvent used for the composite material slurry is used. Specifically, acrylonitrile-butadiene copolymer hydride is used.

Further, trifluoropropylene carbonate, vinylene carbonate, catechol carbonate, 1,6-dioxaspiro[4,4]nonane-2,7-dione and 12-crown-4-ether can be used for the composite material slurry, in order to improve stability and life duration of the battery. Also, these can be used as included in the after-mentioned electrolyte solution.

The amount of the organic solvent in the composite material slurry is adjusted so as to be an appropriate viscosity for coating in accordance with the kinds of the electrode active material and binder. Specifically, the concentration of solid content, mixed by the electrode active material, binder and other additives, in composite material slurry is adjusted at, preferably 30 to 90 mass%, further preferably 40 to 80 mass%.

The composite material slurry is obtained by mixing electrode active material, binder for active material layer to be added in accordance with necessity, conductivity improver, the other additive agents, and organic solvent by using a blender. As for the blending, the above-mentioned respective components can be supplied into the blender together and mixed. When using electrode active material, binder for active material layer, conductivity improver and viscosity improver as components of composite material slurry, such method that the conductivity improver and viscosity improver are mixed in the organic solvent so as to disperse the conductive material finely, then the binder for active material layer and the electrode active materials are added and further mixed is preferable, in view of improving dispersibility of the slurry. As for the mixing machine, although a ball mill, sand mill, a pigment dispersing machine, a grinder, an ultrasonic dispersion machine, a homogenizer, a planetary mixer and Hobart mixer can be used. The ball mill is preferred because aggregation of the conductive material and the electrode active material can be prevented.

The granularity of the composite material slurry is preferably 35µm or less, further preferably 25µm or less. When the granularity of the slurry is within the above-mentioned range, a uniform electrode having high dispersibility of the conductive material can be obtained.

Although a collector is not particularly limited if it has electric conductivity and electrochemical durability, in view of having heat resistance, for example, metallic material such as Fe, Cu, Al, Ni, Stainless steel, Ti, Ta, Au, Pt and the like are preferable. In particular, Al is preferable for a positive electrode of nonaqueous electrolyte lithium ion secondary battery, and Cu is particularly preferable for a negative electrode. Although a shape of the collector is not particularly limited, a sheet having about 0.001 to 0.5mm thickness is preferable. The collector is preferably subjected to surface roughening treatment in advance, for improving binding strength of the composite material. As for a method for roughening surface, mechanical polishing, electropolishing and chemical polishing are exemplified. In the mechanical polishing, a coated abrasive in which abrasive particles are adhered, a grind stone, an emery wheel and a wire brush provided with steel wire are used. Also, in order to improve bonding strength and conductivity of the electrode composite material layer, an intermediate layer may be formed on a surface of the collector.

A method for manufacturing the electrode active material layer may be any methods which can adhere the electrode active material layer in the form of lamina on at least one surface, preferably on both surfaces of the collector. For example, said composite material slurry is coated on the collector and is dried, then heat applied for more than one hour at 120 °C or more so as to form the electrode active material layer. Although a method for coating the composite material slurry to the collector is not limited, a doctor blade method, a dip method, a reverse roll method, a direct roll method, a gravure method, an extrusion method and a brush application method are exemplified. As for the drying method, for example, drying by warm air, hot air and low humid air, vacuum drying, drying methods by irradiating (far) infrared radiation and electron beam are exemplified.

Next, a porosity of the composite material electrode is preferably lowered by pressure treatment with using mold press or roll press. A preferable range of the porosity is 5% to 15%, further preferably 7% to 13%. When the porosity is too high, charging efficiency and discharge efficiency are deteriorated. When the porosity is too low, problems that it is hard to obtain a high volume capacity, defect due to easily peeling the composite material are occurred. Further, when using curable polymer, it is preferable to perform curing.

A thickness of the electrode active material layer is normally 5 to 300µm, preferably 10 to 250µm for both positive and negative electrodes.

### (electrolyte solution)

As for the electrolyte solution, an organic electrolyte solution wherein supporting electrolyte is solved in the organic solvent is used. As for the supporting electrolyte, lithium salt is used. As for the lithium salt, although there is no limitation particularly, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂) NLi are exemplified. In particular, LiPF₆, LiClO₄, CF₃SO₃Li which are easily soluble to solvent and show high dissociation degree are preferred. They may be used as combination of two kinds or more. Because the supporting electrolyte having high dissociation degree is used to make the lithium ion conductivity higher, the lithium ion conductivity can be controlled by a kind of supporting electrolyte.

Although the organic solvent used for the electrolyte solution is not particularly limited if it is possible to dissolve the supporting electrolyte, carbonates such as dimethyl carbonate (DMC), ethylene carbonate (EC), diethyl carbonate (DEC), propylene carbonate (PC), butylene carbonate (BC) and methylethyl carbonate (MEC); esters such as γ-butyrolactone and methyl formate; ethers such as 1,2-dimethoxyethane and tetrahydrofuran; sulfur-containing compounds such as sulfolane and dimethyl sulfoxide are used preferably. Also, mixture liquids of these solvents may be used. In particular, carbonates are preferable, since they have high conductivity and wide stable potential area. When the viscosity of the used solvent is low, the lithium ion conductivity becomes higher, hence the lithium ion conductivity can be controlled by a kind of the solvent.

The concentration of the supporting electrolyte in the electrolyte solution is normally 1 to 30 mass%, preferably 5 mass% to 20 mass%. Also, in accordance with the kind of the supporting electrolyte, it is used at a concentration of 0.5 to 2.5 mol/L normally. When either the concentration of the supporting electrolyte is too low or too high, the ion conductivity tends to be decreased. When the concentration of the used electrolyte is low, a swelling degree of the polymer particle becomes larger, hence the lithium ion conductivity can be controlled by a concentration of the electrolyte solution.

As for a specific manufacturing method for the lithium ion secondary battery, for example, a method wherein positive electrode and a negative electrode are overlapped via a separator of the invention, the resulting laminate is inputted to a battery container by rolling or folding in accordance with a battery shape, and filling electrolyte solution to the battery container and sealing is exemplified. A separator of the invention is formed by coating porous film either on both sides or one side of the separator. Also, it is possible to prevent pressure rising of inside of the battery, over charge and discharge by inputting over-current protective elements such as expand metal, fuse and PTC elements or a lead plate in accordance with necessity. A shape of the battery may be any of a coin type, a button type, a sheet type, a cylindrical type, a square type and a flat type

### (Examples)

Below, although the present invention will be explained with showing an example, the present invention is not limited thereto. Note that, part and % in this example are by mass unless otherwise indicated.

In the examples and comparative examples, various physical properties are evaluated as follows.

### <deformation property of separator>

A slurry for a porous film was coated on a single layer polypropylene made separator of 65mm width × 500mm length × 25µm thickness manufactured by a drying method, then dried for 20 minutes under 90°C to obtain a separator with a porous film. The presence of wrinkles on said separator with porous film was visually observed. This observation was made to ten test pieces, and when the number of test piece wherein wrinkles were observed was one or less, it was considered A, when two to four, B, and when five or more, C.

Further, the length "a" (mm) of the dried separator with the porous film was measured, and a deformation rate (=a/500×100) % of said separator was obtained. When the deformation rate of the separator was 98% or more, it was determined A, when 95% or more and less than 98%, B, when 90% or more and less than 95%, C, and when less than 90%, D. When the deformation rate of the separator is higher, deformation of the separator is smaller, showing excellent smoothness of an electrode.

### <dispersibility of inorganic particles in slurry for porous film>

The dispersed particle diameter of inorganic particles in the slurry for a porous film was measured by a laser diffraction particle size distribution measurement device; and a mean volume particle diameter D50 was obtained. Dispersibility was determined by the following criteria. When the dispersed particle diameter is closer to initial particle (mean volume particle diameter of inorganic particles), the aggregation is smaller, showing progress of dispersion.
A: less than µm
B: 0.5 µm or more to less than 1.0 µm
C: 1.0 µm or more to less than 2.0 µm
D: 2.0 µm or more to less than 5.0 µm
E: 5.0µm or more

### <cyclic property>

With a coin type battery of 10 cells, charge and discharge, including charging to 4.3V by 0.2C of constant current method and discharging to 3.0V, was repeated; and electric capacity was measured. An average value of 10 cells was considered a measurement value; and the discharge and charge capacity retention rate, shown by the rate (%) of electric capacity after 50 cycles and the same after 5 cycles, was calculated, and was determined by following criteria. When this value is larger, long term cycle characteristic is superior.
A: 80% or more
B: 70% or more to less than 80%
C: 60% or more to less than 70%
D: 50% or more to less than 60%
E: 40% or more to less than 50%
F: 30% or more to less than 40%
G: less than 30%

### (Example 1)

### <manufacturing method of polymer>

300 parts of ion exchanged water, 41 parts of n-butyl acrylate, 41.5 parts of ethyl acrylate, 15 parts of acrylonitrile, 2.0 parts of glycidylmethacrylate, 0.5 parts of 2-acrylamide-2-methylpropanesulfonic acid, 0.05 parts of t-dodecylmercaptan as molecular weight modifier, 0.3 parts of potassium persulfate as polymerization initiator were added into an autoclave equipped with an agitator, agitated sufficiently, then polymerized by heating to 70°C; and a polymer particle water dispersion was obtained. A polymerization conversion rate measured from the solid content concentration was close to 99%. 320 parts of N-methylpyrrolidone (hereinafter sometimes referred as "NMP") was added to 100 parts of the polymer particle water dispersion and an NMP solution of the copolymer (hereinafter referred as "polymer A") was prepared by distilling water under reduced pressure. The solid content concentration of polymer "A" solution was 8 mass%. The glass transition temperature of polymer "A" was -5°C. The ratio of (meth)acrylonitrile monomer unit and (meth)acrylic ester monomer unit (= (meth) acrylonitrile monomer unit / (meth) acrylic ester monomer unit) in polymer "A" was 15/82.5. The total content ratio of (meth)acrylonitrile monomer unit and (meth)acrylic ester monomer unit was 97.5%. The Content ratio of thermal crosslinking group (epoxy group), in terms of ratio of the monomer (glycidyl methacrylate) including thermal crosslinking group, was 2%. The content ratio of hydrophilic group (sulfonic acid group), in terms of ratio of the monomer (2-acrylamide 2-methylpropanesulfonic acid) including hydrophilic group, was 0.5%.

### <manufacturing slurry for porous film>

Inorganic particles (alumina, 0.3µm mean volume particle diameter) and polymer "A" were blended by 100:3 (a solid content mass ratio) and 40%, in terms of solid content, of N-methylpyrrolidone was further blended, then, slurry "1" for porous film was prepared by dispersing with a bead mill. The dispersed particle diameter of the obtained porous film slurry "1" was measured. The results are shown in Table 1.

### <manufacturing separator for porous film>

The slurry "1" for porous film was coated on one side of a single layer polypropylene made separator of 65mm width × 500mm length × 25µm thickness (porosity 55%), manufactured by a drying method, by using a wire bar so that the thickness after drying was 10µm; then dried for 20 minutes under 90°C to form a porous film, and separator "1" with porous film was obtained. The deformation property of the obtained separator "1" with porous film was evaluated. The results are shown in Table 1.

### <manufacturing negative electrode >

98 parts of graphite having a particle size of 20µm, 4.2m²/g of specific surface area as a negative electrode active material and 1 part, in terms of solid content, of SBR (-10°C glass transition temperature) as binder for the active material layer were blended, further, 1 part of carboxymethylcellulose (CMC) was added and blended by a planetary mixer so that a slurry type electrode composition for a negative electrode (composite material slurry for negative electrode) was prepared. The negative electrode composition was coated on one surface of a copper foil having 0.01mm thickness, dried for 3 hrs at 120°C, and was roll-pressed to thereby obtain a negative electrode active material layer having 80µm thickness.

### <manufacturing battery >

The obtained negative electrode was cut to be a circular shape having 13mmΦ diameter, a lithium metal foil having 0.5mm thickness was cut to be a circular shape having 16mmΦ diameter, and the obtained separator with porous film was cut to be a circular shape having 18mmΦ diameter. A separator "1" with porous film and lithium metal film as the positive electrode were sequentially laminated on a surface of the active material layer side of the negative electrode, and was inserted into a coin type external container made of stainless steel provided with a packing made of polypropylene. Note that a separator "1" with porous film was laminated in order that the porous film layer was laminated on the active material layer side of the negative electrode. Electrolyte solution (EC/DEC=1/2, 1M of LiPF₆) was injected into the container without residual air, fixed by a cap made of stainless steel having 0.2mm thickness via the polypropylene made packing to seal a battery case, thereby a lithium ion secondary battery having 20mm diameter and about 3.2mm thickness was produced (coin cell CR2032). The cyclic property of the obtained battery was measured. Results are shown in Table 1.

### (Example 2)

300 parts of ion exchanged water, 51 parts of n-butyl acrylate, 41.5 parts of ethyl acrylate, 5 parts of acrylonitrile, 2.0 parts of glycidylmethacrylate, 0.5 parts of 2-acrylamide-2-methylpropanesulfonic acid, 0.05 parts of t-dodecylmercaptan as molecular weight modifier, 0.3 parts of potassium persulfate as polymerization initiator were added into an autoclave equipped with an agitator, agitated sufficiently, then polymerized by heating to 70°C; and a polymer particle water dispersion was obtained. A polymerization conversion rate measured from the solid content concentration was close to 99%. 320 parts of NMP was added to 100 parts of the polymer particle water dispersion and an NMP solution of the copolymer (hereinafter referred as "polymer B") was prepared by distilling water under reduced pressure. The solid content concentration of polymer "B" solution was 8 mass%. The glass transition temperature of polymer "B" was -25°C. The ratio of (meth)acrylonitrile monomer unit and (meth)acrylic ester monomer unit (= (meth) acrylonitrile monomer unit /(meth) acrylic ester monomer unit) in polymer "B" was 5/92.5. The total content ratio of (meth)acrylonitrile monomer unit and (meth)acrylic ester monomer unit was 97.5%. The content ratio of thermal crosslinking group (epoxy group), in terms of ratio of the monomer (glycidyl methacrylate) including thermal crosslinking group, was 2%. The content ratio of hydrophilic group (sulfonic acid group), in terms of ratio of the monomer (2-acrylamide 2-methylpropanesulfonic acid) including hydrophilic group, was 0.5%.

Except for changing polymer "A" to polymer "B" for the binder, slurry "2" for the porous film, separator "2" with porous film and battery were prepared as in Example 1. And dispersibility of inorganic particles in slurry "2" for the porous film, separator deformation property of separator "2" with the porous film, and battery cyclic property were evaluated. Results are shown in table 1.

### (Example 3)

300 parts of ion exchanged water, 83 parts of n-butyl acrylate, 15 parts of acrylonitrile, 2.0 parts of glycidylmethacrylate, 0.05 parts of t-dodecylmercaptan as molecular weight modifier, 0.3 parts of potassium persulfate as polymerization initiator were added into an autoclave equipped with an agitator, agitated sufficiently, then polymerized by heating to 70°C; and a polymer particle water dispersion was obtained. A polymerization conversion rate measured from the solid content concentration was close to 99%. 320 parts of NMP was added to 100 parts of the polymer particle water dispersion and an NMP solution of the copolymer (hereinafter referred as "polymer C") was prepared by distilling water under reduced pressure. The solid content concentration of polymer "C" solution was 9 mass%. The glass transition temperature of polymer "C" was 15°C. The ratio of (meth)acrylonitrile monomer unit and (meth)acrylic ester monomer unit (= (meth)acrylonitrile monomer unit /(meth)acrylic ester monomer unit) in polymer "C" was 15/83. Total content ratio of (meth)acrylonitrile monomer unit and (meth)acrylic ester monomer unit was 98%. Content ratio of thermal crosslinking group (epoxy group), in terms of ratio of the monomer (glycidyl methacrylate) including thermal crosslinking group, was 2%. The content ratio of hydrophilic group was 0%.

Except for changing polymer "A" to polymer "C" for the binder, slurry "3" for the porous film, separator "3" with porous film and battery were prepared as in Example 1. And dispersibility of inorganic particles in slurry "3" for the porous film, separator deformation property of separator "3" for the porous film, and battery cyclic property were evaluated. Results are shown in table 1.

### (Example 4)

300 parts of ion exchanged water, 84.5 parts of ethyl acrylate, 15 parts of acrylonitrile, 0.5 parts of allylglycidylether, 0.05 parts of t-dodecylmercaptan as molecular weight modifier, 0.3 parts of potassium persulfate as polymerization initiator were added into an autoclave equipped with an agitator, agitated surficiently, then polymerized by heating to 70°C; and a polymer particle water dispersion was obtained. A polymerization conversion rate measured from solid content concentration was close to 99%. 320 parts of NMP was added to 100 parts of the polymer particle water dispersion and an NMP solution of the copolymer (hereinafter referred as "polymer D") was prepared by distilling water under reduced pressure. The solid content concentration of polymer "D" solution was 10 mass%. The glass transition temperature of polymer "D" was 2°C. The ratio of (meth)acrylonitrile monomer unit and (meth)acrylic ester monomer unit (= (meth)acrylonitrile monomer unit / (meth)acrylic ester monomer unit) in polymer "B" was 15/84.5. Total content ratio of (meth)acrylonitrile monomer unit and (meth)acrylic ester monomer unit was 99.5%. The content ratio of thermal crosslinking group (epoxy group), in terms of ratio of the monomer (allylglycidyl ether) including thermal crosslinking group, was 0.5%. The Content ratio of hydrophilic group was 0%.

Except for changing polymer "A" to polymer "D" for the binder, slurry "4" for the porous film, separator "4" with porous film and battery were prepared as in Example 1. And dispersibility of inorganic particles in slurry "4" for the porous film, separator deformation property of separator "4" for the porous film, and battery cyclic property were evaluated. Results are shown in table 1. Cyclic property of Example 4 does not have practical issue; however, it is inferior to the same of Examples 1 to 3.

### (Comparative Examples 1 to 4)

Except for changing polymer "A" to a polymer described in table 1 as the binder for the porous film, slurry for porous film, separator with porous film and battery were prepared as is the same with Example 1. And dispersibility of inorganic particles in the obtained slurry for the porous film, separator deformation property of the obtained separator for the porous film, and battery cyclic property were evaluated. Results are shown in table 1.

Note that in table 1, "PBA" refers to polybutylacrylate, "PEO" refers to polyethylene oxide, "PVDF" refers to polyvinylidene fluoride, and "PAN" refers topolyacrylonitril.
[Table 1]

**[Table 1]**

| | binder for porous membrane | deformation of separator | | dispersibility of inorganic particles | cyclic characteristic |
|---|---|---|---|---|---|
| | | presence of wrinkles | deformation rate | | |
| Example 1 | polymer "A" | A | A | A | A |
| Example 2 | polymer "B" | A | A | A | B |
| Example 3 | polymer "C" | A | A | A | B |
| Example 4 | polymer "D" | A | A | B | C |
| Comparative Example 1 | PBA | A | A | C | F |
| Comparative Example 2 | PEO | A | B | E | G |
| Comparative Example 3 | PVDF | B | D | C | B |
| Comparative Example 4 | PAN | C | D | C | B |

As seen from table 1, when the binder forming the porous film is a copolymer comprising (meth) acrylonitrile monomer unit and (meth)acrylic ester monomer unit wherein the ratio of (meth)acrylonitrile monomer units and (meth)acrylic ester monomer units (= (meth)acrylonitrile monomer units/ (meth) acrylic ester monomer units in the copolymer of the binder is within the range of 5/95 to 50/50 by mass ratio, dispersibility of inorganic particles in the slurry for porous film is superior and it is capable to prevent deformation when coating on the organic separator (namely, film smoothness property is superior.), therefore, a lithium ion secondary battery thereof has a long term cycle characteristic. Above all examples, Example 1, wherein the copolymer forming the binder has a mass ratio of (meth)acrylonitrile monomer unit and (meth)acrylic ester monomer unit within a range of 10/90 to 20/80 and includes a thermal crosslinking group and a hydrophilic group, provide the best separator deformation property (namely, film smoothness property), inorganic particle dispersibility, and long term cycle characteristic.

## Claims

1. A separator for a lithium ion secondary battery comprising a porous film including nonconductive particles and a binder laminated on an organic separator, said binder including a copolymer comprising (meth)acrylonitrile monomer units and (meth)acrylic ester monomer units; and **characterized in that** the ratio of (meth)acrylonitrile monomer units and (meth)acrylic ester monomer units (= (meth)acrylonitrile monomer units/(meth)acrylic ester monomer units) in the copolymer of the binder is within the range of 5/95 to 50/50 by mass ratio.

2. The separator for a lithium ion secondary battery as set forth in claim 1 wherein the total content of (meth)acrylonitrile monomer units and (meth)acrylic ester monomer units in the copolymer of the binder is 50 mass % or more.

3. The separator for a lithium ion secondary battery as set forth in any one of claims 1 or 2 wherein said binder is crosslinkable by heat or energy irradiation.

4. The separator for a lithium ion secondary battery as set forth in any one of claims 1 to 3 wherein said copolymer of the binder includes a thermal crosslinkable group and said thermal crosslinkable group is at least one selected from the group consisting of an epoxy group, N-methylol amide group and oxazoline group.

5. The separator for a lithium ion secondary battery as set forth in any one of claims 1 to 4 wherein said copolymer of the binder further includes at least one kind of hydrophilic group selected from the group consisting of a carboxylic acid group, hydroxy group and sulfonic acid group.

6. A manufacturing method of a separator for a lithium ion secondary battery **characterized by** comprising coating a slurry for a porous film comprising nonconductive particles, a binder including a copolymer comprising (meth)acrylonitrile monomer units and (meth)acrylic ester monomer units in which the ratio of (meth)acrylonitrile monomer units and (meth)acrylic ester monomer units (= (meth)acrylonitrile monomer units/(meth)acrylic ester monomer units) in the copolymer of the binder is within the range of 5/95 to 50/50 by mass ratio, and a solvent on an organic separator, and drying the same.

7. A lithium ion secondary battery comprising a positive electrode, a negative electrode, an electrolyte solution, and the separator as set forth in any one of claims 1 to 5.

## Patentansprüche

1. Ein Separator für einen Lithiumionen-Akkumulator, umfassend eine nicht leitende Teilchen und ein Bindemittel enthaltende poröse Folie laminiert auf einem organischen Separator, wobei das Bindemittel ein (Meth)acrylonitril-Monomereinheiten und (Meth)acrylester-Monomereinheiten umfassendes Copolymer enthält; und **dadurch gekennzeichnet, dass** das Verhältnis von (Meth)acrylonitril-Monomereinheiten und (Meth)acrylester-Monomereinheiten (= (Meth)acrylonitril-Monomereinheiten/ (Meth)acrylester-Monomereinheiten) im Copolymer des Bindemittels im Bereich von 5/95 bis 50/50, bezogen auf das Massenverhältnis, liegt.

2. Der Separator für einen Lithiumionen-Akkumulator wie in Anspruch 1 beschrieben, wobei der Gesamtgehalt an (Meth)acrylonitril-Monomereinheiten und (Meth)acrylester-Monomereinheiten im Copolymer des Bindemittels 50 Massen% oder mehr beträgt.

3. Der Separator für einen Lithiumionen-Akkumulator wie in einem der Ansprüche 1 oder 2 beschrieben, wobei das Bindemittel durch Wärme- oder Energiestrahlung vernetzt werden kann.

4. Der Separator für einen Lithiumionen-Akkumulator wie in einem der Ansprüche 1 bis 3 beschrieben, wobei das Copolymer des Bindemittels einen wärmevernetzbaren Rest enthält und der wärmevernetzbare Rest mindestens ein Rest, ausgewählt aus der Gruppe bestehend aus einem Epoxidrest, N-Methylolamidrest und Oxazolinrest, ist.

5. Der Separator für einen Lithiumionen-Akkumulator wie in einem der Ansprüche 1 bis 4 beschrieben, wobei das Copolymer des Bindemittels ferner mindestens eine Art hydrophilen Rest, ausgewählt aus der Gruppe bestehend aus einem Carbonsäurerest, einer Hydroxygruppe und einem Sulfonsäurerest, enthält.

6. Ein Herstellungsverfahren für einen Separator für einen Lithiumionen-Akkumulator, **dadurch gekennzeichnet, dass** es das Beschichten eines organischen Separators mit einer Aufschlämmung für eine poröse Folie, umfassend nicht leitende Teilchen, ein Bindemittel, enthaltend ein Copolymer, umfassend (Meth)acrylonitril-Monomereinheiten und (Meth)acrylester-Monomereinheiten, wobei das Verhältnis von (Meth)acrylonitril-Monomereinheiten und (Meth)acrylester-Monomereinheiten (= (Meth)acrylonitril-Monomereinheiten/(Meth)acrylester-Monomereinheiten) im Copolymer des Bindemittels im Bereich von 5/95 bis 50/50, bezogen auf das Massenverhältnis, liegt, und ein Lösungsmittel, und das Trocknen der Beschichtung umfasst.

7. Ein Lithiumionen-Akkumulator, umfassend eine positive Elektrode, eine negative Elektrode, eine Elektrolytlösung und den Separator wie in einem der Ansprüche 1 bis 5 beschrieben.

## Revendications

1. Séparateur pour batterie secondaire au lithium-ion comprenant un film poreux incluant des particules non conductrices et un liant qui sont stratifiés sur un séparateur organique, ledit liant comprend un copolymère comprenant des motifs monomères de (méth)acrylonitrile et des motifs monomères d'ester (méth)acrylique ; et **caractérisé en ce que** le rapport des motifs monomères de (méth)acrylonitrile et des motifs monomères d'ester (méth)acrylique (= motifs monomères de (méth)acrylonitrile/motifs monomères d'ester (méth)acrylique) dans le copolymère du liant est compris dans la plage de 5/95 à 50/50 en rapport de masse.

2. Séparateur pour batterie secondaire au lithium-ion selon la revendication 1, dans lequel la teneur totale des motifs monomères de (méth)acrylonitrile et des motifs monomères d'ester (méth)acrylique dans le copolymère du liant est 50 % en masse ou plus.

3. Séparateur pour batterie secondaire au lithium-ion selon la revendication 1 ou 2, dans lequel ledit liant est réticulable par la chaleur ou par rayonnement d'énergie.

4. Séparateur pour batterie secondaire au lithium-ion selon l'une quelconque des revendications 1 à 3, dans lequel ledit copolymère du liant comprend un groupe réticulable thermique et ledit groupe réticulable thermique est au moins choisi dans le groupe constitué par un groupe époxy, un groupe N-méthylolamide et un groupe oxazoline.

5. Séparateur pour batterie secondaire au lithium-ion selon l'une quelconque des revendications 1 à 4, dans lequel ledit copolymère du liant comprend en outre au moins un type de groupe hydrophile choisi dans le groupe constitué par un groupe acide carboxylique, un groupe hydroxy et un groupe acide sulfonique.

6. Méthode de fabrication d'un séparateur pour batterie secondaire au lithium-ion, **caractérisée en ce qu'**elle comprend le revêtement d'une suspension pour un film poreux comprenant des particules non conductrices, un liant incluant un copolymère comprenant des motifs monomères de (méth)acrylonitrile et des motifs monomères d'ester (méth)acrylique dans lequel le rapport des motifs monomères de (méth)acrylonitrile et des motifs monomères d'ester (méth)acrylique (= motifs monomères de (méth)acrylonitrile/motifs monomères d'ester (méth)acrylique) dans le copolymère du liant est compris dans la plage de 5/95 à 50/50 en rapport de masse, et un solvant sur un séparateur organique, et le séchage de ce dernier.

7. Batterie secondaire au lithium-ion comprenant une électrode positive, une électrode négative, une solution d'électrolyte et le séparateur selon l'une quelconque des revendications 1 à 5.
